# EUROPÄISCHE PATENTSCHRIFT

(11) **EP 1 680 903 B1**
(45) Veröffentlichungstag und Bekanntmachung des Hinweises auf die Patenterteilung: **01.01.2014**
(21) Anmeldenummer: 04791191.2
(22) Anmeldetag: 11.10.2004
(51) Int. Cl.: H04L 12/18, H04L 29/06, H04W 4/12, H04W 12/02, H04W 80/12

(54) **VERFAHREN ZUM BERTRAGEN VON VERSCHL SSELTEN NUTZDATENO BJEKTEN**
METHOD FOR TRANSFERRING ENCRYPTED USEFUL DATA OBJECTS
PROCEDE POUR TRANSFERER DES OBJETS DE DONNEES UTILES CRYPTEES

(30) Priorität: 07.11.2003 DE 10351961
(43) Veröffentlichungstag der Anmeldung: 19.07.2006
(73) Patentinhaber: Siemens Aktiengesellschaft, 80333 München (DE)
(72) Erfinder: MEYER, Oliver, 38271 Baddeckenstedt (DE); SCHMIDT, Andreas, 38124 Braunschweig (DE); TRAUBERG, Markus, 38159 Velchede (DE)
(86) Internationale Anmeldenummer: PCT/EP2004/052494
(87) Internationale Veröffentlichungsnummer: WO 2005/046160

(56) Entgegenhaltungen:
- US-A1- 2002 108 049
- US-A1- 2002 138 435

## Beschreibung

Die vorliegende Erfindung betrifft ein Verfahren zum Übertragen von verschlüsselten Nutzdatenobjekten auf ein Telekommunikationsendgerät, wie beispielsweise ein Mobiltelefon. Insbesondere betrifft die vorliegende Erfindung ein Verfahren, bei dem das Eintreffen und die Nutzbarmachung des verschlüsselten Nutzdatenobjekts auf dem Telekommunikationsendgerät benutzerfreundlich angezeigt wird.

Es wird derzeit ein Verfahren bzw. Dienst zum zuverlässigen und abrechenbaren Übertragen von Nutzdatenobjekten auf ein Telekommunikationsendgerät, insbesondere in der Ausführung eines Mobilfunkgeräts oder Mobiltelefons, in einem Telekommunikationsnetz diskutiert. Dabei soll das Übertragen oder auch Herunterladen der Nutzdatenobjekte zu dem Mobilfunkgerät mittels eines von der Open Mobile Alliance (OMA) spezifizierten Protokolls oder einem Internet-Protokoll (z.B. Hypertext Transfer Protocol: http) erfolgen. Ein Dienst zum Übertragen kann dabei derart spezifiziert sein, dass einem Benutzer mit einem auf dem Mobilfunkgerät verfügbaren Anwendungsprogramm, das als ein Übertragungsklient oder im Fall eines reinen Herunterladens von Daten als ein Herunterlad-Klient bezeichnet werden kann, das Übertragen von beliebigen Nutzdatenobjekten ermöglicht werden soll, die von einer oder mehreren Datenbereitstellungskomponenten, insbesondere Servern von Dienstanbietern oder Inhaltanbietern, im Datenkommunikationsnetz angeboten werden.

Das WAP-Forum bzw. dessen Nachfolgeorganisation Open Mobile Alliance (OMA) hat dabei verschiedene Verfahren zur Verwaltung expliziter Nutzungsrechte für digitale Inhalte beliebiger Art, wie beispielsweise auch multimedialer Daten, definiert. Dabei ist vorgesehen, ein zu übertragendes Nutzdatenobjekt mit Restriktionen bzw. Beschränkungen bezüglich der Nutzung durch den Empfänger bzw. Benutzer des Mobilfunkgeräts zu versehen. Beispielsweise kann damit die Anzahl der Benutzungen des Nutzdatenobjekts oder auch die Benutzungsdauer eingeschränkt werden. Die praktische Umsetzung erfolgt durch die Beschreibung der Restriktionen mit einer entsprechenden Sprache, wie beispielsweise der ODRL (Open Digital Rights Language) oder der von der OMA spezifizierten OMA DRM Rights Expression Language (REL), wobei der Übertragungs-Klient oder eine andere spezielle Anwendung, ein sogenannter DRM-Agent, zur Verwaltung der mit einem (digitalen) Nutzdatenobjekt verknüpften Rechte (DRM: Digital Rights Management) die Rechtebeschreibung empfängt, auswertet, in einem geschützten, dem Benutzer nicht zugänglichen Speicherbereich auf dem Mobilfunkgerät ablegt und die Rechte bei einer Anfrage des Benutzers, das Objekt zu nutzen, entsprechend der Rechtebeschreibung gewährt oder nicht. Das Nutzdatenobjekt selbst kann vor unautorisiertem Zugriff entweder dadurch geschützt werden, dass es verschlüsselt in einem frei zugänglichen Speicherbereich auf dem Mobilfunkgerät abgelegt wird, oder dass es von einer speziellen Anwendung, beispielsweise dem DRM-Agenten, verwaltet wird, die keinen unautorisierten Zugriff auf das Objekt durch den Benutzer zulässt.

Gemäß einer von der Open Mobile Alliance spezifizierten Variante, der sogenannten "Separate-Delivery" (getrennte Übersendung), für die Verwaltung von DRM-geschützten Inhalten wird ein von einer Datenbereitstellungskomponente bereitgestelltes Nutzdatenobjekt verschlüsselt und zum Transport und zur Speicherung auf ein Telekommunikationsendgerät, wie einem Mobilfunkgerät, in einer sogenannten Container-Datei bzw. einem sogenannten Container-Objekt verpackt (der beispielsweise den Datentyp oder Content-Typ "Application/VND.OMA.DRM.Content" zugewiesen bekommen hat). Mit einem Dienst zum zuverlässigen Übertragen von Inhalten von einer Datenbereitstellungskomponente (Content Download) wird das verschlüsselte Nutzdatenobjekt in dem Container-Objekt verpackt mittels WAP-Protokollen (wie beispielsweise dem WSP: Wireless Session Protocol) oder Internet-Protokollen (wie beispielsweise dem http) auf das Telekommunikationsendgerät übertragen. Separat vom verschlüsselten Nutzdatenobjekt wird ein sogenanntes Rechteobjekt über einen sicheren Kanal auf das Telekommunikationsendgerät, beispielsweise automatisch mittels WAP-Push, übertragen. Das Rechteobjekt enthält eine Beschreibung der Rechte, die dem Benutzer zur Nutzung des verschlüsselten Nutzdatenobjekts gewährt werden, eine Referenz auf das Container-Objekt, die eine Zuordnung des Rechteobjekts zum entsprechenden Container-Objekt ermöglicht, und einen Schlüssel, mit dem das verschlüsselte Nutzdatenobjekt entschlüsselt werden kann, um es anschließend zu nutzen. Auf dem Telekommunikationsendgerät, wie dem Mobilfunkgerät, ist zur Nutzung der Kombination aus dem in dem Container-Objekt gepackten, verschlüsselten Nutzdatenobjekt und dem Rechteobjekt eine spezielle Einrichtung bzw. Anwendung notwendig, die der oben erwähnte DRM-Agent sein kann. Nach dem Übertragen des Rechteobjekts auf die Telekommunikationseinrichtung wird das Rechteobjekt direkt dem DRM-Agenten übergeben, der für die Verwaltung und Wahrung des Geheimnisses, nämlich des Schlüssels zum Entschlüsseln des verschlüsselten Nutzdatenobjekts, verantwortlich ist. Praktisch legt der DRM-Agent das Rechteobjekt vor einem unautorisierten Zugriff durch andere Anwendungen oder Benutzer auf dem Telekommunikationsendgerät geschützt ab. Wenn ein verschlüsseltes Nutzdatenobjekt genutzt werden soll, so wird zunächst der DRM-Agent aktiviert. Dieser sucht ein zu dem Container-Objekt passendes Rechteobjekt in dem von ihm verwalteten Speicherbereich in der Telekommunikationseinrichtung anhand der im Container-Objekt und auch im Rechteobjekt enthaltenen Identifikation, überprüft, ob für die angefragte Nutzungsart (wie beispielsweise ein "Abspielen" von Musikdaten oder ein "Anzeigen" von Bilddaten, usw.) Rechte gewährt werden können und entschlüsselt das Nutzdatenobjekt mit dem Schlüssel aus dem Rechteobjekt, falls die Rechte gewährt werden können. Mit dem oben beschriebenen Verfahren, bei dem ein verschlüsseltes Nutzdatenobjekt und ein von diesem separates Rechteobjekt verwendet werden können, wird der Wert digitaler Daten nicht mehr durch das (verschlüsselte) Nutzdatenobjekt oder das Container-Objekt selbst, sondern vielmehr durch das Rechteobjekt und dem darin enthaltenen Schlüssel dargestellt, ohne den ja das verschlüsselte Nutzdatenobjekt nicht nutzbar ist. Somit können in diesem Fall die verschlüsselten Nutzdatenobjekte verpackt in den Container-Objekten frei zugänglich auf dem Telekommunikationsendgerät gespeichert werden.

Da es sich, wie bereits erwähnt, bei den zu übertragenden (verschlüsselten) Nutzdatenobjekten um Datenobjekte mit multimedialen Inhalten und somit Daten mit großem Umfang handeln kann, ist für eine entsprechende Übertragung derartiger Daten ein Dienst mit großer Übertragungskapazität erforderlich. Beispielsweise ist der von der 3GPP (3rd Generation Partnership Project) und von der OMA spezifizierte Multimedia Messaging Service (MMS) in der Lage, eine Vermittlung und Übertragung von multimedialen Nachrichten zu und von Mobilkommunikationsteilnehmern durchzuführen.

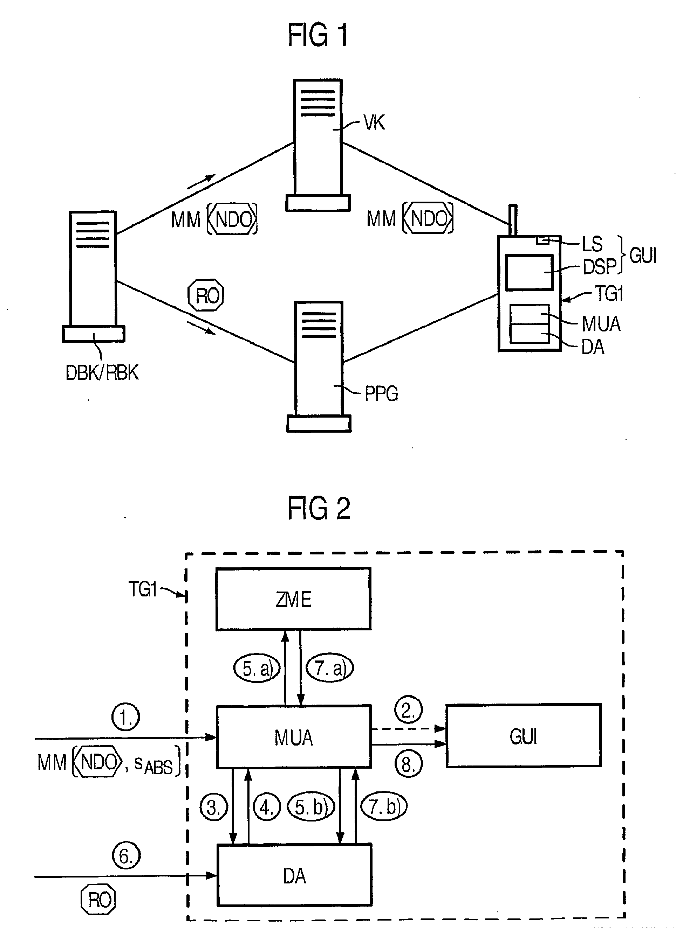

Eine Kombination beider Techniken DRM und MMS ist somit sinnvoll. Mit MMS können wertvolle digitale Inhalte zu anderen Teilnehmern übertragen werden, wobei die konkreten Nutzungsrechte für die Inhalte definiert und ebenfalls übermittelt werden können. Die Inhalte werden dazu in den DRM-Container-Objekten gepackt und optional verschlüsselt (abhängig vom gewählten DRM-Verfahren). Damit kann die Nutzung der Inhalte auf den/die adressierten Empfänger der MMS-Nachricht eingeschränkt werden und z.B. einer unerwünschten Weiterverbreitung durch einfaches Weiterleiten einer Nachricht durch den ersten Empfänger vorgebeugt werden. Als ein Beispiel für die Anwendung einer Kombination aus DRM und MMS können abonnementartige Dienste angesehen werden. Ein Benutzer ordert dazu bei einem Anbieter eines derartigen Dienstes die Zustellung von Nutzdatenobjekten (mit Bildinhalten, Audioinhalten, Textinhalten oder sonstigen Informationsinhalten) beliebiger Art bei Verfügbarkeit, d.h. zum Beispiel regelmäßig wenn bestimmte Ereignisse eintreten (bei einem Tor in einem Fußballspiel eine Videosequenz mit dem Hergang des Tores, aktuelle Wettervorhersage mit einem Bild einer Wetterkarte und einer Audioinformation zur Erläuterung der Karte, usw.). Wie es in Figur 1 gezeigt ist, sendet der Anbieter durch seine Datenbereitstellungskomponente DBK (beispielsweise einem Datenserver im Internet) dem Benutzer an sein Telekommunikationsendgerät TG1 die gewünschten Informationen in Form von verschlüsselten Nutzdatenobjekten NDO per MMS zu, d.h. das/die Nutzdatenobjekte NDO erreichen integriert in eine Multimedianachricht MM das Telekommunikationsendgerät TG1 über eine Vermittlungskomponente VK, beispielsweise in der Form einer MMS-Vermittlungseinheit, im Push-Modus zu Zeitpunkten, die der Benutzer im allgemeinen nicht vorhersehen kann und ohne dass der Benutzer zum herunterladen explizit einen Ladevorgang einleiten muss, was einen signifikanten Unterschied zum sogenannten Pull-Modus darstellt, bei dem der Benutzer stets eine explizite Anfrage an den Anbieter schicken muss, um ein gewünschtes Nutzdatenobjekt zu erhalten. Parallel dazu schickt der Rechteanbieter, der mit dem oben erwähnten Dienstanbieter identisch sein kann, durch die Datenbereitstellungskomponente DBK das/die dem verschlüsselten Nutzdatenobjekt NDO zugeordnete(n) Rechteobjekt(e) RO per WAP-Push über ein WAP-Push-Proxy-Gateway PPG zum Telekommunikationsendgerät TG1 des Benutzers. Das bedeutet, dass Nutzdatenobjekt und Rechteobjekt(e) auf getrennten Wegen und zeitlich asynchron das Terminal des Empfängers erreichen. Im Telekommunikationsendgerät TG1 werden die über die Vermittlungskomponente übertragenden MMS-Nachrichten MM, insbesondere mit den Nutzdatenobjekten NDO, von einer MMS-Nutzerapplikation MUA empfangen und verarbeitet, und werden die Rechteobjekte RO von einem DRM-Agenten DA empfangen und verwaltet, wobei die MMS-Nutzerapplikation MUA und der DRM-Agent DA zur Nutzbarmachung des verschlüsselten Nutzdatenobjekts durch das entsprechende Rechteobjekt miteinander in Verbindung stehen. Bei der MMS-Nutzerapplikation MUA und dem DRM-Agent DA kann es sich um Software-Anwendungen handeln, die von einer Verarbeitungseinheit (nicht dargestellt), wie einem Mikroprozessor, im Telekommunikationsendgerät TG1 ausgeführt werden.

Wie bereits erwähnt, werden die verschlüsselten Nutzdatenobjekte und die entsprechenden binären Rechteobjekte auf separaten unabhängigen Transportkanälen übertragen. Dabei erfolgt die Übertragung herkömmlicherweise zeitlich unsynchronisiert. Erst wenn beide Objekte auf dem Empfangsendgerät vorliegen ist eine Nutzung der geschützten Inhalte eines Nutzdatenobjekts auf dem Endgerät möglich. Bei Nutzung des http bzw. der speziellen Variante der Open Mobile Alliance zum Herunterladen von Nutzdatenobjekten auf mobile Endgeräte (sogenannter "OMA Download") fordert der Benutzer mit einem sogenannten "http Get-Request" (http-Zustellaufforderung) aktiv ein konkretes Nutzdatenobjekt an, das ihm in der sogenannten "http Response-Message" (http-Antwortnachricht) anschließend zugestellt wird. Bei dieser Art der Zustellung eines DRM-geschützten Nutzdatenobjektes kann der Anbieter zusätzlich zum Nutzdatenobjekt automatisch ein Rechteobjekt per Short-Message-Service (SMS) bzw. per WAP Push zustellen.

Anders ausgedrückt, kann herkömmlicherweise das Verhalten des Telekommunikationsendgeräts beim zeitlich unsynchronisierten Empfang von DRM-geschützten Nutzdatenobjekten per MMS und entsprechenden Rechteobjekten bisher nicht spezifisch auf die Belange von DRM abgestimmt werden. Eine eingehende MMS-Nachricht MM mit enthaltenen DRM-geschützten Nutzdatenobjekten NDO wird dem Benutzer unmittelbar in einer ersten Empfangsnachricht über eine Benutzerschnittstelle GUI (vgl. Figur 1), welche beispielsweise ein Display DSP und einen Lautsprecher LS aufweist, signalisiert. Wenn der Benutzer die Nachricht öffnet und die nötigen Rechteobjekte noch nicht vorliegen, wird ihm die Nutzung des/der Nutzdatenobjekte(s) zunächst durch das Endgerät verweigert. Nach dem Eintreffen des/der entsprechenden Rechteobjekte wird dem Benutzer in einer zweiten Empfangsnachricht zusätzlich signalisiert werden, dass eine Nutzung des Nutzdatenobjektes in der Multimedianachricht nun möglich ist. Für den Benutzer ist diese Art der Informationsdarstellung durch sein Endgerät relativ unbefriedigend, da er zunächst zwar über das Eintreffen der Multimedianachricht informiert wird, diese dann aber nicht nutzen kann, weil die erforderlichen Rechteobjekte in der Regel noch nicht empfangen wurden (durch den zeitlich asynchroner Empfang von Nutzdatenobjekt und Rechteobjekt(e) wie oben beschrieben). Erst wenn der Benutzer ein zweites mal informiert wird, dass nun die erforderlichen Rechteobjekte auch eingetroffen sind, kann er die Nachricht wirklich nutzen. Der Benutzer wird somit unnötigerweise zweimal informiert und beim ersten mal zusätzlich noch daran erinnert, dass die Nutzdatenobjekte einem Schutz, d.h. gewissen Restriktionen, unterliegen.

us2002138435 offenbart ein Verfahren zur Inhalteverteilungskontrolle wobei ein Gebraucher, nach Empfang einer Transaktionsmarkierung über ein erstes Netzwerk, ein Validierungsbericht über ein zweites Netzwerk zurückschickt und schliesslich die gewünschten Inhalte empfängt

Es ist somit die Aufgabe der vorliegenden Erfindung eine benutzfreundliche Möglichkeit zu schaffen, den Empfang eines nutzbaren Nutzdatenobjekts auf einem Telekommunikationsendgerät zu signalisieren.

Diese Aufgabe wird durch die unabhängigen Ansprüche gelöst. Vorteilhafte Ausgestaltungen sind Gegenstand der Unteransprüche.

Dabei umfasst ein Verfahren zum Übertragen von verschlüsselten Nutzdatenobjekten an ein erstes Telekommunikationsendgerät folgende Schritte. Zunächst wird zumindest ein verschlüsseltes Nutzdatenobjekt von einer Vermittlungskomponente eines Telekommunikationsnetzes an das erste Telekommunikationsendgerät übertragen. Ferner wird eine Zeitinformation von der Vermittlungskomponente an das erste Telekommunikationsendgerät übertragen, die angibt, bis zu welchem Zeitpunkt ein dem zumindest einen verschlüsselten Nutzdatenobjekt zugeordnetes Rechteobjekt, das den Schlüssel sowie die Benutzungsrechte für das zugeordnete Nutzdatenobjekt enthält, ebenso beim ersten Telekommunikationsendgerät eintrifft. Der Zeitpunkt kann dabei zum einen derart bestimmt bzw. angegeben sein, dass eine konkrete absolute Zeit und/oder ein konkretes absolutes Datum in der Zeitinformation angegeben ist, bis wann ein zugeordnetes Rechteobjekt eintreffen soll, oder kann zum anderen durch ein folgendes Zeitintervall bestimmt sein, innerhalb dem (bis zum letztmöglichen Zeitpunkt) die Rechteobjekte zu erwarten sind. Anschließend wird nun ein dem zumindest einen Nutzdatenobjekt zugeordnetes Rechteobjekt von dem ersten Telekommunikationsendgerät empfangen. Das erste Telekommunikationsendgerät überprüft nun, ob der in der Zeitinformation angegebene Zeitpunkt schon verstrichen ist, und gibt in dem Fall, dass er noch nicht verstrichen ist, über eine Benutzerschnittstelle ein Signal (beispielsweise optisch oder akustisch) bezüglich des Empfangens eines benutzbaren Nutzdatenobjekts aus. Das bedeutet, erst wenn sowohl das Nutzdatenobjekt und das zugehörige passende Rechteobjekt zur Nutzbarmachung des Nutzdatenobjekts beim Telekommunikationsendgerät (innerhalb der vorbestimmten Zeit) eingetroffen sind, dann erfolgt eine Signalisierung durch das Telekommunikationsendgerät an den Benutzer. Durch diese verzögerte Signalisierung erfährt der Benutzer somit erst bei Vorliegen eines nutzbaren Nutzdatenobjekts, dass ein solches auf seinem Telekommunikationsendgerät eingetroffen ist, und wird gar nicht erst darüber in Kenntnis gesetzt, dass das Nutzdatenobjekt geschützt bzw. verschlüsselt ist, und zur Entschlüsselung ein Rechteobjekt benötigt, das eventuell noch an das Telekommunikationsendgerät zugestellt wird. Durch diese benutzfreundlich Methode der Übertragung von verschlüsselten Nutzdatenobjekten an ein Telekommunikationsendgerät und Signalisierung darüber an einen Benutzer kann die Akzeptanz bezüglich der Einführung verschlüsselter Nutzdatenobjekt erhöht werden.

Stellt das erste Telekommunikationsendgerät bei der Überprüfung fest, dass der in der Zeitinformation angegebene Zeitpunkt schon verstrichen ist, so gibt es gemäß einer Ausgestaltung über die Benutzerschnittstelle ein (einfaches) Signal aus, dass zwar ein verschlüsseltes Nutzdatenobjekt empfangen wurde, jedoch (noch) keine Rechte bzw. kein Rechteobjekt zur Nutzbarmachung zur Verfügung steht.

Als Kriterium, bis wann ein Rechteobjekt noch gültigerweise ohne Ausgabe eines einfachen Signals empfangen werden darf, kann ferner ein im ersten Telekommunikationsendgerät vorbestimmter Zeitpunkt bzw. eine vorbestimmte Zeitspanne (nach Empfang des Nutzdatenobjekts) verwendet werden, der/die beispielsweise vom Benutzer des Telekommunikationsendgerät einstellbar ist. Dabei kann als endgültig letzter Zeitpunkt ein Minimalwert oder Maximalwert der beiden Zeitpunkte (in der Zeitinformation angegeben bzw. vom Benutzer voreingestellt), d.h. entweder der näher oder weiterweg liegende Zeitpunkt vom Empfang des (verschlüsselten) Nutzdatenobjekts, verwendet werden.

Das dargestellte Verfahren zum Übertragen von verschlüsselten Nutzdatenobjekten an das erste Telekommunikationsendgerät erfolgt gemäß einer vorteilhaften Ausgestaltung gemäß dem Multimedia Messaging Service (MMS). Dadurch wird eine Übertragung von (verschlüsselten) Nutzdatenobjekten ermöglicht, die auch multimediale Inhalte mit großem Datenumfang, wie digitale Fotos oder Video-Clips, umfassen können.

Gemäß einer vorteilhaften Ausgestaltung wird das zumindest eine verschlüsselte Nutzdatenobjekt zusammen mit der Zeitinformation mittels einer Zustellnachricht an das erste Telekommunikationsendgerät übertragen. Im Falle des MMS kann hier das verschlüsselte Nutzdatenobjekt und die Zeitinformation in einer MMS-Zustellnachricht integriert sein. Es ist auch denkbar, dass die Zeitinformation separat mittels einer Benachrichtigungsnachricht (im Fall des MMS mittels einer MMS-Empfängerbenachrichtigung), die angibt, dass bei der Vermittlungskomponente ein Nutzdatenobjekt zur Zustellung an das erste Telekommunikationsendgerät bereitliegt, an das erste Telekommunikationsendgerät übertragen wird. Das bedeutet im letzteren Fall wird zunächst in einer ersten Nachricht die Zeitinformation und erst später in einer zweiten Nachricht das Nutzdatenobjekt an das erste Telekommunikationsendgerät übertragen. Die jeweilige Benachrichtigungsnachricht und/oder Zustellnachricht kann ein separates Kopffeld aufweisen, dem als Feldwert, die Zeitinformation zugeordnet ist.

Gemäß einer weiteren vorteilhaften Ausgestaltung kann das zumindest eine verschlüsselte Nutzdatenobjekt von einer Datenbereitstellungskomponente, beispielsweise einem Datenserver eines Anbieters von Inhalten bzw. Nutzdatenobjekten (im Telekommunikationsnetz) an die Vermittlungskomponente zur Weiterleitung an das erste Telekommunikationsendgerät gesendet werden. Dabei können die Nutzdatenobjekte im Rahmen eines Abonnements oder eines sonstigen Informationsdienstes übertragen werden. Ferner ist es auch möglich, dass verschlüsselte Nutzdatenobjekte von einem zweiten Telekommunikationsendgerät an die Vermittlungskomponente zur Weiterleitung an das erste Telekommunikationsendgerät gesendet werden.

Gemäß einer weiteren vorteilhaften Ausgestaltung hat das erste Telekommunikationsendgerät eine Zeitmesseinrichtung bzw. einen Timer, den es nach Erhalt der Zeitinformation anweist, die Zeit bis zu dem in der Zeitinformation angegebenen Zeitpunkt zu messen.

Weiterhin kann das erste Telekommunikationsendgerät eine Kommunikationseinrichtung zum Durchführen der Kommunikation mit der Vermittlungskomponente, insbesondere eine MMS-Nutzeranwendung, und eine Verwaltungseinrichtung, insbesondere einen DRM-Agenten, zum Verwalten der verschlüsselten Nutzdatenobjekte, welche mit der Kommunikationseinrichtung in Verbindung steht, aufweisen. Hierbei ist es möglich, dass die Kommunikationseinrichtung nach Empfang des zumindest einen verschlüsselten Nutzdatenobjekts bei der Verwaltungseinrichtung anfragt, ob für das zumindest eine verschlüsselte Nutzdatenobjekt bereits ein Rechteobjekt vorhanden ist, und bei Nichtvorhandensein, die Zeitmesseinrichtung anweist, die Zeit zu messen.

Gemäß einer weiteren vorteilhaften Ausgestaltung werden das zumindest eine verschlüsselte Nutzdatenobjekt und das jeweils zugeordnete Rechteobjekt über zwei verschiedene Transportkanäle zum ersten Telekommunikationsendgerät übertragen.

Gemäß einer vorteilhaften Ausgestaltung sind das erste Telekommunikationsendgerät und eventuell weitere Telekommunikationsendgeräte sowie die Vermittlungskomponente Teil eines Telekommunikationsnetzes. Dabei kann das oder die weiteren Telekommunikationsendgeräte Teil eines ersten Telekommunikationsnetzes sein (im Falle mehrerer Telekommunikationsendgeräte müssen diese jedoch nicht Teil desselben Telekommunikationsnetzes sein). Entsprechend kann die Vermittlungskomponente, welche insbesondere als ein Server eines Datenübertragungsdienstes, wie beispielsweise als ein MMS-Relay-Server ausgebildet ist, in einem zweiten Telekommunikationsnetz vorgesehen sein, das mit dem oder den Telekommunikationsnetzen, welche dem oder den weiteren Telekommunikationsendgeräten zugeordnet sind, verbunden ist. Dieses zweite Telekommunikationsnetz kann insbesondere als ein auf Internet-Protokollen, wie dem Hypertext Transfer Protocol, basiertes Telekommunikationsnetz ausgeführt sein. Es ist ferner denkbar, dass die Datenbereitstellungskomponente auch in dem zweiten Telekommunikationsnetz oder in einem weiteren mit diesem verbundenen Telekommunikationsnetz vorgesehen ist.

Um das Verfahren zum Übertragen von Nutzdaten-Objekten möglichst flexibel nutzen zu können, kann das Telekommunikationsendgerät (oder auch die weiteren Telekommunikationsendgeräte) vorzugsweise als ein mobiles Telekommunikationsendgerät ausgebildet sein. Insbesondere ist es denkbar, dass die Daten bzw. Nachrichten zu und von dem ersten oder dem weiteren Telekommunikationsendgerät über eine Luftschnittstelle gesendet werden. Dabei kann das jeweilige Telekommunikationsendgerät ein Funkmodul umfassen. Das Telekommunikationsendgerät kann beispielsweise als ein Mobiltelefon, ein Schnurlostelefon, als ein Smartphone (Kombination aus einem kleinen tragbaren Computer und einem Mobiltelefon), als ein PDA (PDA: Personal Digital Assistant = persönlicher digitaler Assistent) bzw. als ein Organizer ausgebildet sein. Weiterhin kann das Telekommunikationsendgerät auch andere mobil erreichbare Geräte umfassen, wie einen Personal Computer (PC) oder einen Laptop, die mittels eines angeschlossenen Mobilfunkgeräts (Mobiltelefon oder Mobilfunkmodul) über ein Mobilfunknetz erreicht werden können. Das Mobilfunkgerät kann dann beispielsweise über ein Kabel an den Personal Computer bzw. Laptop angeschlossen sein oder auch diese drahtlos über eine Infrarot-Schnittstelle oder ein lokales Bluetooth-Netz kontaktieren. Wie bereits erwähnt, kann die Übertragung von Daten und Nachrichten zu und von dem jeweiligen Telekommunikationsendgerät dann mittels WAP-Protokollen oder dem Hypertext Transfer Protocol (http) erfolgen. Dabei kann ein Telekommunikationsendgerät, wie das Mobilfunkgerät, einschließlich des diesem zugeordneten Telekommunikationsnetzes in der Ausführung eines Mobilfunknetzes gemäß dem GSM (Global System for Mobile Communication)-Standard oder dem UMTS (Universal Mobile Telecommunications System)-Standard usw. arbeiten. Derartige Mobilfunknetze bzw. Telekommunikationseinrichtungen gemäß dem GSM- oder UMTS-Standard können eine Plattform für WAP-Protokolle bzw. den WAP-Protokoll-Stack (WAP: Wireless Application Protocol) darstellen, mittels dem Daten (Mitteilungen bzw. Nutzdaten-Objekte) im jeweiligen Mobilfunknetz übertragbar sind.

Vorteilhafterweise sind das erste und das zweite Telekommunikationsnetz durch eine Verbindungskomponente miteinander verbunden. Im Falle der Verwendung des WAP-Protokoll-Stack, wie oben erwähnt, ist es möglich, durch die Verwendung eines WAP-Gateways als Schnittstelle bzw. Verbindungskomponente zwischen einem Mobilfunknetz und einem anderen Netzwerk, beispielsweise einem auf einem Internet-Protokoll basierenden Netz, eine Verbindung zu diesem zu schaffen. Auf diese Weise ist es möglich, dass sich die Vermittlungskomponenten in einem auf einem Internet-Protokoll basierenden Netzwerk, wie dem Internet, befindet, wobei die Daten (Nachrichten, Nutzdatenobjekte) über ein WAP-Gateway und schließlich über eine Luftschnittstelle eines Mobilfunknetzes zwischen der oder den Basisstationen des Mobilfunknetzes und an die jeweiligen Telekommunikationsendgeräte von Benutzern übertragen werden können. In diesem Zusammenhang sei erwähnt, dass insbesondere im Rahmen des MMS-Datenübertragungsdienstes Nachrichten von einem MMS-Relay-Server als Teil einer Vermittlungskomponente automatisch, d.h. ohne Anforderung eines Telekommunikationsendgeräts, an ein Telekommunikationsendgerät mittels WAP-Push gesendet werden können. Hierbei dient der MMS-Relay-Server als sogenannter Push-Initiator, der das WAP-Gateway bzw. eine Unterkomponente von diesem, nämlich das Push-Proxy-Gateway, dazu veranlasst, eine Nachricht per WAP-Push an das Telekommunikationsendgerät zu senden. Beispielsweise wird gemäß dem MMS-Übertragungsdienst die Empfängerbenachrichtung mittels WAP-Push an das erste Telekommunikationsendgerät übertragen. Die Rechteobjekte werden von der Datenbereitstellungskomponente direkt an das WAP Push-Proxy-Gateway (PPG) zur Zustellung zum Telekommunikationsendgerät gegeben. Die beiden Transportwege von der Datenbereitstellungskomponente zum Telekommunikationsendgerät sind für das Nutzdatenobjekt und das Rechteobjekt somit unterschiedlich und zeitlich nicht synchronisiert, da die Datenbereitstellungskomponente keinen direkten Einfluss auf die Zustellung der Multimedianachricht durch die Vermittlungskomponente zur Telekommunikationseinrichtung hat.

Gemäß einer vorteilhaften Ausgestaltung kann es sich bei den Nutzdatenobjekten um Daten in Form von Textdaten, Bilddaten bzw. Videodaten, Audiodaten, ausführbare Programme oder Softwarekomponenten oder eine Kombination dieser Datenarten, d.h. um multimediale Daten bzw. Inhalte, handeln.

Gemäß einem weiteren Aspekt wird eine Telekommunikationsanordnung umfassend eine Vermittlungskomponente und ein erstes Telekommunikationsendgerät mit einer Benutzerschnittstelle geschaffen, wobei die Telekommunikationsanordnung dafür ausgelegt ist, ein oben erwähntes Verfahren durchzuführen.

Bevorzugte Ausführungsformen der vorliegenden Erfindung werden nachfolgend bezugnehmend auf die beiliegenden Zeichnungen näher erläutert. Es zeigen:
- Figur 1: ein Blockschaltbild einer Architektur einer Telekommunikationsanordnung zum Übertragen von verschlüsselten Nutzdatenobjekten sowie zugeordneten Rechteobjekten von einer Datenbereitstellungskomponente über eine Vermittlungskomponente an ein Telekommunikationsendgerät;
- Figur 2: ein Blockschaltbild der wesentlichen Komponenten eines Telekommunikationsendgeräts, bei dem der Nachrichtenfluss beim Empfang eines verschlüsselten Nutzdatenobjekts gemäß einer bevorzugten Ausführungsform der Erfindung darstellt ist;
- Figur 3: ein Ablaufdiagramm zur Erläuterung des Prozessablaufs in einer MMS-Nutzerapplikation beim Empfang einer Multimedianachricht bzw. MMS-Nachricht mit DRM-geschützten Nutzdatenobjekten;
- Figur 4: ein Blockschaltbild, das den Nachrichtenfluss bei der Zustellung eines verschlüsselten Nutzdatenobjekts an ein Telekommunikationsendgerät gemäß dem MMS zeigt;
- Figur 5: eine MMS-Nachricht in Form einer MMS-Empfängerbenachrichtigung gemäß einer Ausführungsform der Erfindung;
- Figur 6: eine MMS-Nachricht in Form einer MMS-Zustellnachricht gemäß einer Ausführungsform der Erfindung.

zur Erläuterung des Nachrichtenfluss gemäß einer bevorzugten Ausführungsform der Erfindung zwischen den wesentlichen Komponenten eines Telekommunikationsendgeräts beim Empfang eines verschlüsselten Nutzdatenobjekts entsprechend Figur 2, sei zunächst noch einmal auf Figur 1 eingegangen, um die Kommunikationsumgebung des Telekommunikationsendgeräts zu beschreiben.

Wie es in Figur 1 zu sehen ist, umfasst die Telekommunikationsanordnung gemäß einer bevorzugten Ausführungsform zum Durchführen eines Verfahrens zum Übertragen von Nutzdatenobjekten mittels des MMS eine Vermittlungskomponente VK, ein WAP-Push-Proxy-Gateway PPG und ein (erstes) Telekommunikationsendgerät TG1. Das Telekommunikationsendgerät ist dabei beispielsweise als Mobiltelefon ausgebildet, welches nach dem UMTS-Standard arbeitet. Es sei ferner angenommen, dass das als Mobiltelefon ausgebildete Telekommunikationsendgerät TG1 Teil eines Mobilfunknetzes ist. Das Mobiltelefon TG1 ist in der Lage, WAP-Protokolle (z.B. Wireless Session Protocol: WSP, usw.) bzw. den WAP-Protokoll-Stack zu verwenden, um Daten über eine Luftschnittstelle an eine entsprechende stationäre Sende-/Empfangsanordnung des dem Mobiltelefon TG1 zugeordneten Mobilfunknetzes zu übertragen. Ferner umfasst die Telekommunikationsanordnung eine Datenbereitstellungskomponente DBK eines Anbieters von Inhalten bzw. Nutzdatenobjekten, wobei die Datenbereitstellungskomponente auch als eine "Rechtebereitstellungskomponente" RBK eines Anbieters von Rechteobjekten zu den jeweiligen Nutzdatenobjekten dienen kann (der Anbieters von Rechteobjekten und der Anbieter von Nutzdatenobjekt können dabei identisch sein). Dabei können die Vermittlungskomponente VK, die Datenbereitstellungskomponente DBK bzw. Rechtebereitstellungskomponente RBK in dem dem Mobiltelefon TG1 zugeordneten Mobilfunknetz vorgesehen sein oder können beispielsweise im Internet vorgesehen sein, das über entsprechende WAP-Gateways mit dem Mobilfunknetz des Mobiltelefons TG1 verbunden ist.

Wie es ferner in Figur 1 gezeigt ist, umfasst das Mobiltelefon TG1 eine MMS-Nutzerapplikation bzw. MMS-Nutzeranwendung MUA zum Durchführen der Kommunikation insbesondere gemäß dem MMS mit der Vermittlungskomponente sowie eine DRM-Anwendung bzw. einen DRM-Agenten DA zum Verwalten der verschlüsselten Nutzdatenobjekte. Ferner umfasst das Mobiltelefon TG1 eine Benutzerschnittstelle GUI, welche beispielsweise einen Lautsprecher LS und eine Anzeige bzw. ein Display DSP zum Darstellen von Text und/oder graphischen Inhalten.

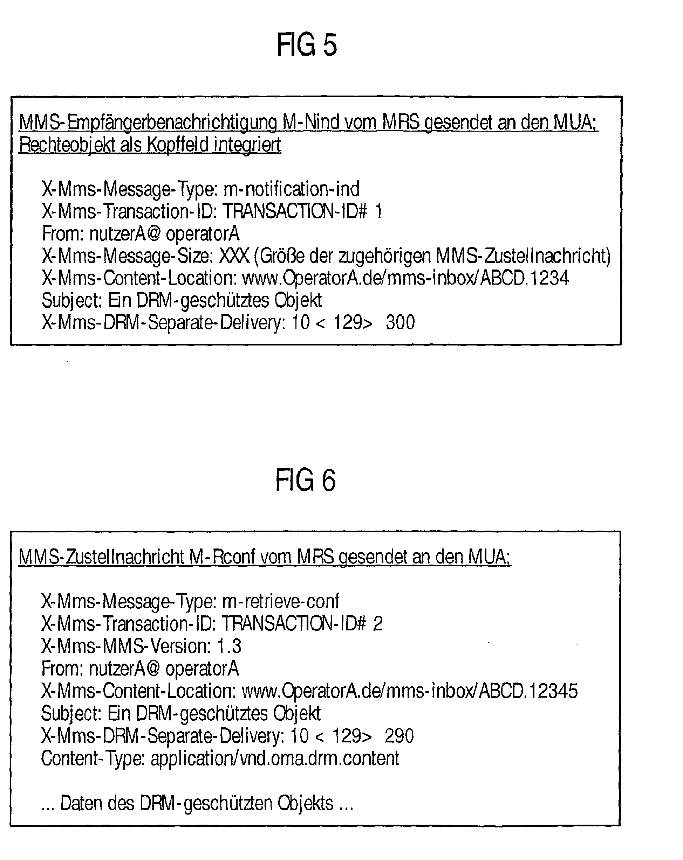

Im Folgenden soll nun eine Ausführungsform der Erfindung bezüglich des Empfangs und der Auswertung einer empfangenen Multimedianachricht und von zugeordneten Rechteobjekten, sowie die darauf basierende Ausgabe von Informationen für den Nutzer durch das Mobiltelefon TG1 anhand von Figur 2 erläutert werden. Der logische Ablauf des Informationsflusses und der Steuersignale in dem Mobiltelefon TG1 mit integrierter MMS-Nutzerapplikation MUA, DRM-Agent DA und graphischer Benutzerschnittstelle GUI wird anhand der Nummern in der Figur beschrieben:
1. Eine von der Vermittlungskomponente VK stammende Multimedianachricht MM mit den enthaltenen, DRM-geschützten Inhalten bzw. Nutzdatenobjekten NDO wird von dem Mobiltelefon TG1 empfangen und von der darin integrierten MMS-Nutzerapplikation MUA verarbeitet und ausgewertet. Dabei stellt die MMS-Nutzerapplikation MUA in dem dargestellten Fall fest, dass die MMS-Nachricht MM DRM-geschützten Inhalt gemäß der Methode "Separate Delivery" enthält, d.h. dass die Inhalte bzw. Nutzdatenobjekte NDO in Objekte bzw. Container-Objekte mit dem MIME-Typ "application/vnd.oma.drm.content" eingebettet sind. Weiterhin stellt die MMS-Nutzerapplikation MUA fest, ob die MMS-Nachricht MM eine Signalisierung bzw. Zeitinformation s_{ABS} enthält (vgl. dazu beispielsweise unten Erläuterung zu den Figuren 5 und 6), mit der eine zeitlich nahe Zustellung des/der zur Nutzbarmachung benötigten Rechteobjekte/s angezeigt wird. Beides wird in dem dargestellten Fall als gegeben angenommen.
2. Dieser Schritt stellt zum besseren Verständnis das Verhalten einer herkömmlichen MMS-Nutzerapplikation MUA dar und ist hier nur zur Information enthalten. Danach gibt die MMS-Nutzerapplikation MUA an die graphische Nutzerschnittstelle die Information über eine eingegangene Multimedianachricht MM bzw. ein eingegangenes verschlüsseltes NDO zur Darstellung für den Benutzer weiter. Gemäß der bevorzugten Ausführungsform der Erfindung wird genau dieses Verhalten im dargestellten Fall unterbunden. Stattdessen erfolgt die weitere Verarbeitung wie nachfolgend dargestellt.
3. Die MMS-Nutzerapplikation MUA fragt zunächst bei dem DRM-Agent DA nach, ob für das oder die in der Multimedianachricht MM enthaltenen DRM-geschützten Nutzdatenobjekte NDO entsprechende Rechteobjekte schon vorliegen. Das kann beispielsweise bei einem Abonnement von Nutzdatenobjekten (wie regelmäßige Übertragung von Börseninformationen oder Fußballergebnissen) der Fall sein, oder wenn die Rechteobjekte bereits zugestellt wurden bevor die Multimedianachricht eingetroffen ist.
4. Der DRM-Agent DA sucht nach passenden Rechteobjekten. Im hier dargestellten Fall findet er keine und meldet dies an die MMS-Nutzerapplikation MUA weiter.
5. a) Die MMS-Nutzerapplikation MUA wertet die Zeitinformation s_{ABS} in dem Informationselement in der MMS-Nachricht MM aus und startet eine Zeitmesseinrichtung bzw. einen Timer ZME mit diesem Wert. Alternativ kann die MMS-Nutzerapplikation MUA einen Minimalwert aus s_{ABS} und der Obergrenze einer Zeitverzögerung für die Benachrichtigung des Benutzers über eingegangene Nachrichten bzw. Nutzdatenobjekte bilden und den Timer ZME mit diesem Wert starten. b) Die MMS-Nutzerapplikation MUA startet im DRM-Agent DA eine Funktion, durch die der DRM-Agent DA bei eintreffenden Rechteobjekten, die einen Zugriff auf die DRM-geschützten Nutzdatenobjekte in der Multimedianachricht MM ermöglichen, eine Nachricht an die MMS-Nutzerapplikation MUA schickt. Ein Übergabeparameter ist bzw. sind die Identifizierer (ContentID) der DRM-geschützten Nutzdatenobjekte NDO. Diese Identifizierer sind auch in den zugeordneten Rechteobjekten RO enthalten. Die Identifizierer dienen also dazu, die zugeordneten Rechteobjekte zu erkennen.
   Anschließend geht die MMS-Nutzerapplikation MUA in eine Warteschleife, die sie bei Eintreten eines Ereignisses gemäß 7a) oder 7b) wieder verlässt.
6. Ein oder mehrere Rechteobjekte RO werden vom Mobiltelefon TG1 beispielsweise per WAP-Push über ein WAP-Push-Proxy-Gateway PPG (vgl. dazu wieder Figur 1) empfangen und intern an den DRM-Agent DA gereicht. In diesem Beispiel geschieht dies bevor der Timer ZME abläuft.
7.
   a) Der Timer ZME läuft ab und sendet eine Benachrichtigung darüber an die MMS-Nutzerapplikation MUA oder alternativ -
   b) gemäß 6) wurden die erforderlichen Rechteobjekte RO empfangen und der DRM-Agent DA benachrichtigt darüber die MMS-Nutzerapplikation MUA.
8. Die MMS-Nutzerapplikation steuert nun die graphische Benutzerschnittstelle GUI an, so dass diese den Eingang einer neuen Multimedianachricht MM, d.h. den Eingang eines Nutzdatenobjekts NDO anzeigt. Je nachdem, ob die Rechte vorliegen, wird die Multimedianachricht entsprechend entweder bei vorliegenden Rechteobjekten als "nutzbar" (vgl. den Fall 6. Und 7. b)) oder bei nicht vorliegenden Rechteobjekten mit dem Hinweis angezeigt, dass eine Aktivierung noch erforderlich ist (vgl. den Fall 7.a)).

Die Benutzerschnittstelle GUI gibt dann die gerade erwähnte positive (Fall 6. Und 7. b)) oder negative (Fall 7. a)) Information geeignet beispielsweise über das Display DSP in Form einer Textnachricht oder eines entsprechenden Symbols aus und der Benutzer kann im positiven Fall auf die Nachricht bzw. das Nutzdatenobjekt zugreifen.

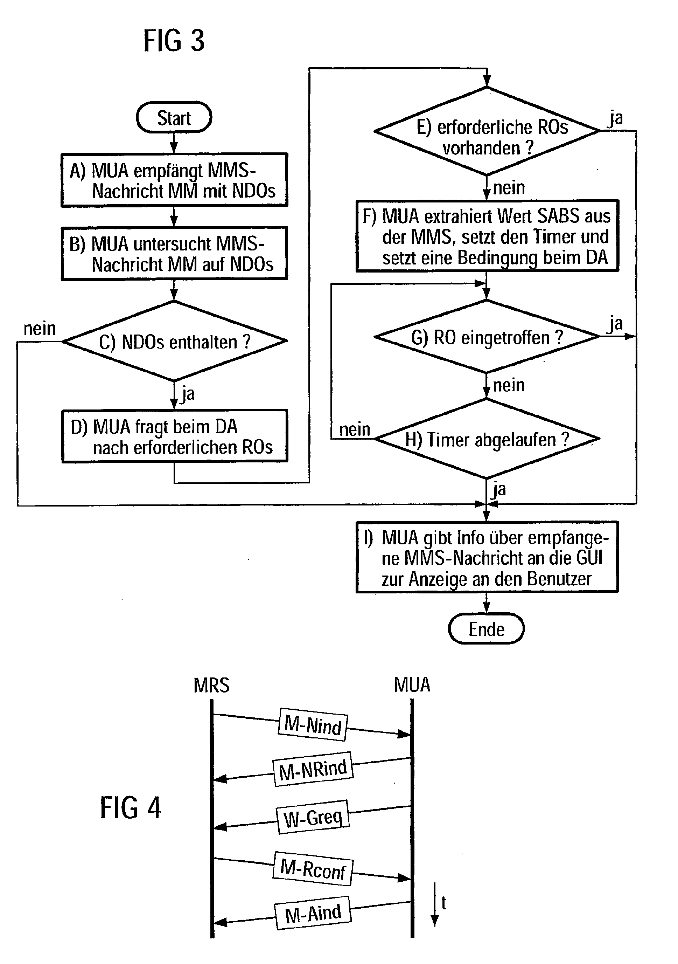

In Figur 3 ist nun die interne Verarbeitung und der Prozessablauf in der MMS-Nutzerapplikation MUA (entsprechend Figur 1 oder 2) bei Empfang einer MMS-Nachricht MM mit enthaltenen, DRM-geschützten Nutzdatenobjekten NDO dargestellt. Der Verlauf wird nachfolgend anhand der Buchstaben der Prozessschritte erläutert:
A) Nach dem Start des Prozesses empfängt die MMS-Nutzerapplikation MUA eine MMS-Nachricht MM, die DRM-geschützte Nutzdatenobjekte NDO sowie eine Zeitinformation s_{ABS} über die künftige Zustellung von Rechteobjekten enthält.
B) Die MMS-Nutzerapplikation MUA untersucht die MMS-Nachricht MM auf enthaltene DRM-geschützte Nutzdatenobjekte NDO und enthaltene Signalisierung bzw. eine Zeitinformation S_{ABS}, dass zusätzlich die zugeordneten Rechteobjekte RO auf separatem Transportweg in naher Zukunft zugestellt werden.
C) Falls beides nicht der Fall ist, wird zu Prozessschritt I) gesprungen. Ansonsten geht die Verarbeitung mit Schritt D) weiter.
D) Die MMS-Nutzerapplikation MUA fragt (bei Vorhandensein von enthaltenen DRM-geschützten Nutzdatenobjekten) beim DRM-Agenten DA nach, ob die den DRM-geschützten Nutzdatenobjehten NDO zugeordneten Rechteobjekte RO bereits vorliegen und erhalt die Information vom DRM-Agent als Antwort.
E) Falls die erforderlichen Rechteobjekte RO bereits vorliegen, wird wieder zu Prozessschritt I) gesprungen, ansonsten geht der Prozess mit Schritt F) weiter.
F) Die MMS-Nutzerapplikation extrahiert die Zeitinformation bzw. den Wert s_{ABS} aus dem entsprechenden Informationselement der MMS-Nachricht MM, falls dieses vorhanden ist. Wenn mehrere dieser Informationselemente in der MMS-Nachricht MM enthalten sind, was bei mehreren DRM-geschützten Nutzdatenobjekten NDO und individueller Signalisierung der separaten Zustellung von Rechteobjekten der Fall sein kann, kann die MMS-Nutzerapplikation MUA die Information z.B. durch Bildung des Maximalwertes oder auch durch Addition der angegebenen Zeitdauern auf einen einzigen Zeitwert s_{GES} reduzieren. Danach kann die MMS-Nutzerapplikation MUA den Zeitwert noch auf einen Maximalwert beschränken, der implementierungsspezifisch im Endgerät abgespeichert werden kann und durch den Benutzer einstellbar sein kann. Mit dem resultierenden Zeitwert startet die MMS-Nutzerapplikation MUA einen Timer ZME und setzt bei dem DRM-Agent DA eine Bedingung, wonach der DRM-Agent DA die MMS-Nutzerapplikation MUA beim Eintreffen von passenden Rechteobjekten RO, d.h. die den DRM-geschützten Nutzdatenobjekten NDO der MMS-Nachricht MM zugeordnet sind, informiert.
G) Die MMS-Nutzerapplikation MUA überprüft, ob alle erforderlichen Rechteobjekte RO für die vorliegende MMS-Nachricht MM eingetroffen sind. Falls ja, d.h. wenn der DRM-Agenten vor Ablauf des Timers ZME eine positive Nachricht über das Eintreffen der passenden Rechteobjekte an die MMS-Nutzerapplikation MUA gesendet hat, wird der Prozess mit Schritt I) fortgesetzt, ansonsten wird der Prozess mit Schritt H) fortgesetzt.
H) Die MMS-Nutzerapplikation MUA überprüft, ob der Timer ZME abgelaufen ist. Falls ja, wird der Prozess mit Schritt I) fortgesetzt, ansonsten wird der Prozess mit Schritt G) tortgesetzt, d.h. die Schleife erneut durchlaufen.
I) Die MMS-Nutzerapplikation MUA gibt die Informationen über die empfangene MMS-Nachricht MM an die graphische Benutzerschnittstelle GUI zur Ausgabe für den Benutzer weiter. Im positiven Fall liegen die zur Nutzung der MMS-Nachricht MM bzw. der darin enthaltenen Nutzdatenobjekte NDO erforderlichen Rechteobjekte RO zu diesem Zeitpunkt vor und der Nutzer kann die Nachricht bzw. die in dieser enthaltenen Nutzdatenobjekte NDO nutzen. Liegen die erforderlichen Rechteobjekte noch nicht vor, so wird dem Benutzer eine Nachricht angezeigt, eine Nutzung ist aber noch nicht oder nur eingeschränkt möglich.

Zusammenfassend kann also festegestellt werden, dass ein wesentlicher Punkt bei dem gerade dargestellten Verfahren zur Übertragung von Nutzdatenobjekten an ein Telekommunikationsendgerät bzw. Mobiltelefon in der gesteuerten Ausgabe von Informationen über eingegangene Multimedianachrichten bzw. Nutzdatenobjekte und zugeordnete Rechteobjekte durch das Telekommunikationsendgerät zu sehen ist. Ein wesentlicher Aspekt ist die Übertragung von Inhalten bzw. Nutzdatenobjekten und Rechteobjekten über zwei logisch separate Transportkanäle zu zwei logisch separaten Funktionseinheiten (MMS-Nutzerapplikation und DRM-Agent), wobei die Übertragung zeitlich nicht synchronisiert ist.

### Weitere Aspekte sind

- Die Auswertung der eingehenden Multimedia-Nachricht durch die MMS-Nutzerapplikation MUA auf in der Nachricht enthaltenes DRM-geschütztes Nutzdatenobjekt NDO,
- Die Auswertung der eingehenden Multimedia-Nachricht MM durch die MMS-Nutzerapplikation MUA auf in der Nachricht enthaltene Informationselemente, die eine in naher Zukunft zu erwartende Zustellung von Rechteobjekten für die DRM-geschützten Inhalte signalisieren,
- Die interne Kommunikation zwischen MMS-Nutzerapplikation MUA und DRM-Agent DA, d.h. Abfrage der MMS-Nutzerapplikation MUA bei dem DRM-Agenten DA auf dem Telekommunikationsendgerät, ob für das oder die in der MMS-Nachricht MM enthaltene(n) DRM-geschützte(n) Nutzdatenobjekt(e) auf dem Telekommunikationsendgerät bereits zugeordnete Rechteobjekte RO vorliegen,
- Die interne Steuerung eines Timers ZME durch die MMS-Nutzerapplikation MUA, d.h. das Starten eines Timers ZME durch die MMS-Nutzerapplikation MUA, wobei das oder die in der MMS-Nachricht MM enthaltenen Informationselemente bzw. Zeitinformationen zur Signalisierung einer bevorstehenden separaten Zustellung von Rechteobjekten RO berücksichtigt wird/werden und weiterhin auch eine maximale Laufzeit des Timers berücksichtigt wird, die implementierungsspezifisch sein und/oder auch vom Benutzer gewählt werden kann,
- Abwarten des Eintreffens des/der einer MMS-Nachricht oder einzelnen MM-Elementen zugeordneten Rechteobjekte(s), wobei der DRM-Agent die Rechteobjekte RO direkt empfängt und verwaltet, und/oder Ablaufen des Timers ZME durch die MMS-Nutzerapplikation MUA,
- Zeitlich verzögerte Ausgabe und Signalisierung der eingegangenen Multimedianachricht MM mit DRM-geschützten Nutzdatenobjekten NDO auf der Benutzerschnittstelle GUI des Telekommunikationsendgerät (TG1), wenn entweder die erforderlichen Rechte vorliegen (oder mindestens eins vorliegt) und der Benutzer direkt auf die Nutzdatenobjekte der Multimedianachricht zugreifen und sie nutzen kann oder alternativ der Timer ZME abgelaufen ist.

Wie bereits zu Figur 1 erwähnt, kann der die Übertragung von verschlüsselt bzw. DRM-geschützten Nutzdatenobjekten von der Vermittlungskomponente VK zum Telekommunikationsendgerät TG1 mittels MMS erfolgen. Der ausführliche Nachrichtenfluss hierzu zwischen der Vermittlungskomponente VK, insbesondere in der Ausführung einer MMS-Vermittlungseinheit bzw. einem MMS-Relay-Server MRS in einem Telekommunikationsnetzwerk, und der MMS-Nutzerapplikation MUA auf dem Telekommunikationsendgerät bzw. Mobiltelefon TG1 ist in Figur 4 gezeigt.

Zunächst wird eine MMS-Empfängerbenachrichtigung M-Nind per WAP-Push vom MRS an die MUA gesendet. In dem dargestellten Fall beantwortet die MUA die Nachricht M-Nind zunächst mit einer Bestätigung M-NRind für die Benachrichtigung. Zu einem späteren Zeitpunkt sendet die MUA eine Herunterladeanfrage W-Greq an den MRS. Dieser antwortet mit einer Zustellnachricht M-Rconf in der das Nutzdatenobjekt bzw. multimediale Inhalt der Nachricht enthalten ist. Schließlich bestätigt die MUA auch die Zustellung der Multimedianachricht mit der Zustellbestätigung M-Aind.

Die beiden folgenden Beispiele verdeutlichen die erfindungsgemäß mögliche Einbettung eines neuen Kopffeldes in eine MMS-Empfängerbenachrichtigung M-Nind bzw. eine MMS-Zustellnachricht M-Rconf:

### Beispiel A:

### Integration des zusätzlichen Informationselements (Zeitinformation) in Form eines Kopffeldes in die MMS-Empfängerbenachrichtigung

Die Integration eines zusätzlichen Informationselementes für die Zeitinformation in eine Empfängerbenachrichtigung erfolgt in diesem Beispiel als zusätzliches Kopffeld, das beispielhaft den Namen "X-MmS-DRM-Separate-Delivery" erhält. Tabelle 1 zeigt die Kopffelder für eine MMS-Empfängerbenachrichtigung inklusive dem erfindungsgemäß neuen Kopffeld "X-Mms-DRM-Separate-Delivery". Es sei hierzu erwähnt, dass in der folgenden Tabelle 1 die Feldnamen und Feldwerte in den originalen englischen Bezeichnungen angegeben sind, die dem Fachmann bekannt sind.

**Tabelle 1**

| Feldname | Feldwert | Beschreibung |
|---|---|---|
| X-Mms-Message-Type | Message-typevalue = m-notification-ind | Verpflichtend. |
| | | Bezeichnet den Typ der MMS-PDU (Packet Data Unit). |
| X-Mms-Transaction-ID | Transaction-id-value | Verpflichtend. |
| | | Transaction-ID zur Identifikation der Empfängerbenachrichtigung (M-Notification.ind bzw. M-Nind) und der korrespondierenden Bestätigung durch den Empfänger (M-NotifyResp.ind bzw. M-NRind). |
| X-Mms-MMS-Version | MMS-version-value | Verpflichtend. |
| | | Die MMS Versionsnummer. |
| From | From-value | Optional. |
| | | Adresse der letzten MMS Nutzerapplikation, die die Multimedianachricht gehandhabt hat, d.h. die die Multimedianachricht entweder gesendet oder weitergeleitet hat. |
| Subject | Subject-value | Optional. |
| | | Betreff der Multimedianachricht. |
| X-Mms-Message-Size | Message-sizevalue | Verpflichtend. |
| | | Datenvolumen der zugehörigen MMS-Zustellnachricht (M-Rconf) in Oktetten. ... |
| ... | ... | ... |
| X-Mms-Content-Location | Content-location-value | Verpflichtend. |
| | | Referenz zum Herunterladen der Multimedianachricht. |
| X-Mms-DRM-Separate-Delivery | DRM-Separate-Delivery-value | Optional. |
| | | Zeigt an, dass ein oder mehrere DRM-geschützte Objekte in der MMS-Zustellnachricht enthalten sein werden und dass zusätzlich DRM-Rechteobjekte z.B. per WAP-Push zum Telekommunikationsendgerät übertragen werden, wobei optional auch die maximale Zustellverzögerung beschrieben wird oder ein Datum/eine Uhrzeit beschrieben wird, bis zu der die Zustellung erfolgt sein wird. |

Es sei erwähnt, dass bei der MMS-Empfängerbenachrichtigung gemäß obiger Ausführungsform der Erfindung in Tabelle 1 das neue Kopffeld doppelt eingerahmt ist.

Gemäß der Ausführungsform kann folgende Definition für den Wert des neuen Kopffeldes angegeben werden:
X-Mms-DRM-Separate-Delivey = Value-length (Absolute-token Date-value | Relative-token Delta-secods-value)
Mit:
- Date-value: Datum und Uhrzeit, bis zu der das oder die erforderliche(n) Rechteobjekt(e) zum Endgerät übertragen sein wird/werden.
- Delta-secods-value: Anzahl der Sekunden, innerhalb derer das oder die erforderliche(n) Rechteobjekt(e) zum Endgerät übertragen sein wird/werden
- Absolute-token = <Oktet 128>
- Relative-token = <Oktet 129>

Als binäres Token für die Codierung des Kopffeldnamens "X-Mms-DRM-Separate-Delivery" wird gemäß der Ausführungsform einer der Werte "0x34", "0x35", "0x36", "0x37", "0x38", "0x39", "0x3A", "0x3B", "0x3C", "0x3D", "0x3E" oder "0x3F" verwendet. Dies hat den Vorteil einer kompakteren Darstellung und einer effizienteren Übertragung der MMS-Nachricht.

Ausgehend von dieser Erläuterung kann nun eine MMS-Empfängerbenachrichtigung prinzipiell den in Figur 5 gezeigten Aufbau haben, wobei die Kopffelder der Anschaulichkeit halber als Text dargestellt sind. Bei einer standardkonformen Übertragung zum Telekommunikationsendgerät werden hingegen binäre Codes verwendet.

In dem in Figur 5 gezeigten Beispiel wird ein Kopffeld mit dem Namen "X-Mms-DRM-Separate-Delivery" in die MMS-Empfängerbenachrichtigung eingebettet. Der WerL besteht aus der ersten Angabe einer Anzahl der noch folgenden Zeichen des Kopffeldes, einem zweiten Wert ("<129>"), der anzeigt, dass der folgende Wert ein "Delta-seconds-value" ist, und einem dritten Wert, dem "Delta-seconds-value" ("300"), der die Anzahl der Sekunden anzeigt, bis alle zugehörigen Rechteobjekte empfangen sein sollten.

Die vorgestellte Variante hat den Vorteil, dass bereits nach der Zustellung der MMS-Empfängerbenachrichtigung für die MMS-Nutzerapplikation offensichtlich ist, dass die MMS-Nachricht DRM-geschützte Objekte enthalten wird und davon ein empfängerspezifisches Verhalten abgeleitet werden kann, wonach beispielsweise alle Nachrichten mit DRM-geschützten Nutzdatenobjekten sofort auf das Telekommunikationsendgerät heruntergeladen werden o.ä..

Eine Rückwärtskompatibilität für MMS Nutzerapplikationen ohne Unterstützung der zusätzlichen DRM-Funktionalität ist mit dem hier vorgestellten Verfahren problemlos möglich. Gemäß OMA/WAP Spezifikation sollen MMS-Nutzerapplikationen unbekannte Kopffelder einfach ignorieren und deren Inhalt verwerfen.

### Beispiel B:

Integration des zusätzlichen Informationselements (Zeitinformation) in Form eines Kopffeldes in die MMS-Zustellnachricht

Das folgende Beispiel demonstriert die Integration eines zusätzlichen Informationselementes in eine MMS-Zustellnachricht. Dies erfolgt analog zu Beispiel A. Die folgende Tabelle 2 zeigt die Definition des erfindungsgemäßen neuen Kopffeldes "X-Mms-DRM-Separate-Delivery" wie bereits in Tabelle 1 dargestellt.

**Tabelle 2**

| Feldname | Feldwert | Beschreibung |
|---|---|---|
| ... | ... | ... |
| X-Mms-DRM-Separate-Delivery | DRM-Separate-Delivery-value | Optional. |
| | | Zeigt an, dass ein oder mehrere DRM geschützte Objekte in der MMS-Zustellnachricht enthalten sein werden und dass zusätzlich DRM-Rechteobjekte z.B. per WAP-Push zum Telekommunikationsendgerät übertragen werden, wobei optional auch die maximale Zustellverzögerung beschrieben wird oder ein Datum/eine Uhrzeit beschrieben wird, bis zu der die Zustellung erfolgt sein wird. |

Das in Figur 6 dargestellte Beispiel einer textuell codierten MMS-Zustellnachricht ist analog zu der oben dargestellten MMS-Empfängerbenachrichtigung und enthält wiederum das erfindungsgemäß neue Kopffeld "X-Mms-DRM-Separate-Delivery" - diesmal aufgrund der etwas späteren Zustellung allerdings mit einem reduzierten "Delta-seconds-value".

Offenbart ist ein Verfahren zum Übertragen von verschlüsselten Nutzdatenobjekten NDO an ein erstes Telekommunikationsendgerät TG1 mit folgenden Schritten. Zunächst wird zumindest ein verschlüsseltes Nutzdatenobjekt von einer Vermittlungskomponente eines Telekommunikationsnetzes an das erste Telekommunikationsendgerät übertragen wird. Ferner wird eine Zeit information s_{ABS} von der Vermittlungskomponente an das erste Telekommunikationsendgerät übertragen, die angibt, bis zu welchem Zeitpunkt ein dem zumindest einen verschlüsselten Nutzdatenobjekt zugeordnetes Rechteobjekt RO, das den Schlüssel sowie die Benutzungsrechte für das zugeordnete Nutzdatenobjekt enthält, ebenso beim ersten Telekommunikationsendgerät eintrifft. Anschließend wird nun ein dem zumindest einen Nutzdatenobjekt zugeordnetes Rechteobjekt von dem ersten Telekommunikationsendgerät empfangen. Das erste Telekommunikationsendgerät überprüft nun, ob der in der Zeitinformation angegebene Zeitpunkt schon verstrichen ist, und gibt in dem Fall, dass er noch nicht verstrichen ist, über eine Benutzerschnittstelle noch kein Signal bezüglich des Empfangens eines Nutzdatenobjekts aus. Erst wenn entweder der angegebene Zeitpunkt verstrichen ist oder das zumindest eine nötige Rechteobjekt (vor dem Verstreichen des angegebenen Zeitpunkts) vom ersten Telekommunikationsendgerät empfangen wurde, gibt die MMS-Nutzerapplikation die Information über das Vorliegen einer Multimedianachricht mit enthaltenem Nutzdatenobjekt an die Benutzerschnittstelle zur Ausgabe weiter.

## Patentansprüche

1. Verfahren zum Übertragen von verschlüsselten Nutzdatenobjekten (NDO) an ein erstes Telekommunikationsendgerät (TG1), bei dem:
zumindest ein verschlüsseltes Nutzdatenobjekt von einer Vermittlungskomponente (VK) eines Telekommunikationsnetzes an das erste Telekommunikationsendgerät (TG1) übertragen wird;
eine Zeitinformation (s_{ABS})von der Vermittlungskomponente (VK) an das erste Telekommunikationsendgerät (TG1) übertragen wird, die angibt, bis zu welchem Zeitpunkt ein dem zumindest einen verschlüsselten Nutzdatenobjekt (NDO) zugeordnetes Rechteobjekt (RO), das den Schlüssel sowie die Benutzungsrechte für das zugeordnete Nutzdatenobjekt enthält, ebenso beim ersten Telekommunikationsendgerät eintrifft;
das erste Telekommunikationsendgerät (TG1) ein dem zumindest einen Nutzdatenobjekt (NDO) zugeordnetes Rechteobjekt (RO) empfängt;
das erste Telekommunikationsendgerät (TG1) über eine diesem zugeordnete Benutzerschnittstelle (GUI) ein Signal bezüglich des Empfangens eines Nutzdatenobjekts erst ausgibt, wenn entweder der in der Zeitinformation angegebene Zeitpunkt oder ein im ersten Telekommunikationsendgerät vorbestimmter zeitpunk nach Empfang des Nutzdatenobjektes verstrichen ist, oder das zumindest eine zur Nutzbarmachung des Nutzdatenobjektes empfangene Rechteobjekt empfangen worden ist.

2. Verfahren nach Anspruch 1, bei dem bei Empfang eines Rechteobjekts (RO) vor dem in der Zeitinformation angegebenen Zeitpunkt oder einem im Telekommunikationsgerät vorbestimmten Zeitpunkt die Benutzerschnittstelle ein Signal bezüglich des Empfangs von einem nutzbaren Nutzdatenobjekt ausgibt.

3. Verfahren nach Anspruch 1 oder 2, bei dem nach Verstreichen des in der Zeitinformation angegebenen Zeitpunkts oder dem im Telekommunikationsgerät vorbestimmten Zeitpunkt ohne vorherigen Empfang eines Rechteobjekts über die Benutzschnittstelle (GUI) lediglich ein Signal bezüglich des Empfangens eines verschlüsselten Nutzdatenobjekts ausgibt.

4. Verfahren nach einem der Ansprüche 1 bis 3, bei dem das zumindest eine verschlüsselte Nutzdatenobjekt (NDO) zusammen mit der Zeitinformation mittels einer Zustellnachricht (M-Rconf) an das erste Telekommunikationsendgerät (TG1) übertragen wird.

5. Verfahren nach einem der Ansprüche 1 bis 3, bei dem die Zeitinformation mittels einer Benachrichtigungsnachricht (M-Nind), die angibt, dass bei der Vermittlungskomponente (VK) ein Nutzdatenobjekt (NDO) zur Zustellung an das erste Telekommunikationsendgerät (TG1) bereitliegt, an das erste Telekommunikationsendgerät übertragen wird.

6. Verfahren nach einem der Ansprüche 1 bis 5, bei dem das zumindest eine verschlüsselte Nutzdatenobjekt (NDO) von einer Datenbereitstellungskomponente (DBK) des Telekommunikationsnetzes oder einem zweiten Telekommunikationsendgerät an die Vermittlungskomponente (VK) zur Weiterleitung an das erste Telekommunikationsendgerät (TG1) gesendet wird.

7. Verfahren nach einem der Ansprüche 1 bis 6, bei dem das erste Telekommunikationsendgerät (TG1) nach Erhalt der Zeitinformation (s_{ABS}) eine diesem zugeordnete Zeitmesseinrichtung (ZME) anweist, die Zeit bis zu dem in der Zeitinformation angegebenen Zeitpunkt oder dem im Telekommunikationsgerät vorbestimmten Zeitpunkt zu messen.

8. Verfahren nach einem der Ansprüche 1 bis 7, bei dem das erste Telekommunikationsendgerät (TG1) eine Kommunikationseinrichtung (MUA) zum Durchführen der Kommunikation mit der Vermittlungskomponente (VK) und eine Verwaltungseinrichtung (DA) zum Verwalten der verschlüsselten Nutzdatenobjekte (NDO), welche mit der Kommunikationseinrichtung in Verbindung steht, aufweist.

9. Verfahren nach Anspruch 7 und 8, bei dem die Kommunikationseinrichtung (MUA) nach Empfang des zumindest einen verschlüsselten Nutzdatenobjekts bei der Verwaltungseinrichtung (DA) anfragt, ob für das zumindest eine verschlüsselte Nutzdatenobjekt (NDO) bereits ein Rechteobjekt (RO) vorhanden ist, und bei Nichtvorhandensein, die Zeitmesseinrichtung anweist, die Zeit zu messen.

10. Verfahren nach einem der Ansprüche 1 bis 9, bei dem das zumindest eine verschlüsselte Nutzdatenobjekt (NDO) und das jeweils zugeordnete Rechteobjekt (RO) über zwei verschiedene Transportkanäle zum ersten Telekommunikationsendgerät (TG1) übertragen werden.

11. Verfahren nach einem der vorhergehenden Ansprüche, bei dem die Nachrichten und Daten zwischen der Vermittlungskomponente (VK) und dem ersten Telekommunikationsendgerät (TG1) im Rahmen des Multimedia Messaging Service übertragen werden.

12. Verfahren nach einem der Ansprüche 4 oder 5 in Verbindung mit Anspruch 11, bei dem es sich bei der Zustellnachricht um eine MMS-Zustellnachricht und/oder bei der Benachrichtigungsnachricht um eine MMS-Empfängerbenachrichtung handelt, wobei die MMS-Zustellnachricht und/oder MMS-Empfängerbenachrichtung ein separates Kopffeld (X-Mms-DRM-Separate-Delivery) aufweisen, dem als Feldwert, die Zeitinformation zugeordnet ist.

13. Verfahren nach einem der Ansprüche 1 bis 12, bei dem Daten zu und von dem ersten (TG1) und/oder zweiten Telekommunikationsendgerät über eine Luftschnittstelle gesendet werden.

14. Verfahren nach Anspruch 13, bei dem das erste und/oder zweite Telekommunikationsendgerät (TG1) ein Funkmodul umfasst, und insbesondere als ein Mobiltelefon, ein Schnurlostelefon, oder ein tragbarer Computer ausgebildet ist.

15. Verfahren nach Anspruch 13 oder 14, bei dem die Übertragung von Nachrichten zu und von dem ersten und/oder zweiten Telekommunikationsendgerät (TG1) mittels WAP-Protokollen oder dem Hypertext Transfer Protocol (http) erfolgt.

16. Verfahren nach einem der Ansprüche 1 bis 15, bei dem das erste Telekommunikationsendgerät (TG1) Teil eines ersten Telekommunikationsnetzes ist.

17. Verfahren nach Anspruch 16, bei dem das erste Telekommunikationsnetz als ein Mobilfunknetz ausgeführt ist, das insbesondere nach dem GSM- oder UMTS-Standard arbeitet.

18. Verfahren nach einem der Ansprüche 16 oder 17, bei dem die Vermittlungskomponente (VK) als ein Teil eines zweiten mit dem ersten Telekommunikationsnetz verbundenen Telekommunikationsnetzes ausgebildet ist, das insbesondere als ein auf Internet-Protokollen, wie dem Hypertext Transfer Protocol, basiertes Telekommunikationsnetz ausgeführt ist.

19. Verfahren nach Anspruch 18, bei dem das erste und das zweite Telekommunikationsnetz durch eine Verbindungskomponente miteinander verbunden sind, welche insbesondere als ein WAP-Gateway ausgeführt ist.

20. Verfahren nach einem der Ansprüche 1 bis 19, bei dem die Datenbereitstellungskomponente (DBK) als ein Server eines Inhalteanbieters ausgebildet ist.

21. Verfahren nach einem der Ansprüche 1 bis 19, bei dem das Nutzdatenobjekt (NDO) Textinformation, Audioinformation, Videoinformation, ein ausführbares Programm, ein Softwaremodul oder eine Kombination dieser Informationen enthält.

22. Telekommunikationsanordnung umfassend eine Vermittlungskomponente (VK) sowie zumindest ein erstes Telekommunikationsendgerät (TG1), wobei die Telekommunikationsanordnung dafür ausgelegt ist, ein Verfahren nach einem der Ansprüche 1 bis 19 durchzuführen.

23. Telekommunikationsendgerät (TG1) zum Verarbeiten von verschlüsselten Nutzdatenobjekten (NDO), mit folgenden Merkmalen:
einer Kommunikationseinrichtung (MUA) zum Empfangen zumindest eines verschlüsselten Nutzdatenobjekts;
eine Verwaltungseinrichtung (DA) zum Empfangen und Verwalten von verschlüsselten Nutzdatenobjekten zugeordneten Rechteobjekten, welche den Schlüssel sowie die Benutzungsrechte für ein zugeordnetes Nutzdatenobjekt enthalten;
eine Benutzerschnittstelle (GUI) zum Ausgeben von Informationen an einen Benutzer;
wobei die Kommunikationseinrichtung (MUA) ferner dafür ausgelegt ist, eine im Zusammenhang mit dem Empfang des zumindest einen verschlüsselten Nutzdatenobjekts empfangene Zeitinformation (s_{ABS}), welche angibt, bis zu welchem Zeitpunkt ein dem zumindest einen verschlüsselten Nutzdatenobjekt (NDO) zugeordnetes Rechteobjekt (RO) bei der Verwaltungseinrichtung (DA) eintrifft, zu verarbeiten und erst über die Benutzerschnittstelle (GUI) ein Signal bezüglich des Empfangens eines benutzbaren Nutzdatenobjekts auszugeben, wenn die Verwaltungseinrichtung (DA) vor dem angegebenen Zeitpunkt noch ein Rechteobjekt (RO) empfängt.

## Claims

1. Method for transferring encrypted useful data objects (NDO) to a first telecommunication terminal (TG1), according to which:
at least one encrypted useful data object is transferred to the first telecommunication terminal (TG1) by a switching component (VK) of a telecommunication network;
a time information (s_{ABS}) is transferred to the first telecommunication terminal (TG1) by the switching component (VK), specifying the time-point by when a rights object (RO) will also have arrived at the first telecommunication terminal, said rights object being assigned to the at least one encrypted useful data object (NDO) and containing the key and the usage rights for the assigned useful data object;
the first telecommunication terminal (TG1) receives a rights object (RO) which is assigned to the at least one useful data object (NDO);
the first telecommunication terminal (TG1) does not output a signal via a user interface (GUI) which has been assigned to this first telecommunication terminal, said signal concerning the receipt of a useful data object, until either the time-point specified in the time information has passed or a predefined time-point in the first telecommunication terminal following receipt of the useful data object has passed, or the at least one rights object which is received for activating the useful data object has been received.

2. Method according to claim 1, according to which if a rights object (RO) is received before the time-point which is specified in the time information or before a predefined time-point in the telecommunication terminal, the user interface outputs a signal concerning the receipt of a useable useful data object.

3. Method according to claim 1 or 2, according to which if the time-point which is specified in the time information or the predefined time-point in the telecommunication terminal is passed before a rights objects RO is received, the user interface (GUI) merely outputs a signal concerning the receipt of an encrypted useful data object.

4. Method according to one of the claims 1 to 3, according to which the at least one encrypted useful data object (NDO) together with the time information is transferred to the first telecommunication terminal (TG1) by means of a delivery message (M-Rconf).

5. Method according to one of the claims 1 to 3, according to which the time information is transferred to the first telecommunication terminal by means of a notification message (M-Nind) which specifies that a useful data object (NDO) is available at the switching component (VK) for delivery to the first telecommunication terminal (TG1).

6. Method according to one of the claims 1 to 5, according to which the at least one encrypted useful data object (NDO) is sent by a data provision component (DBK) of the telecommunication network or by a second telecommunication terminal to the switching component (VK) for forwarding to the first telecommunication terminal (TG1).

7. Method according to one of the claims 1 to 6, according to which following receipt of the time information (s_{ABS}) the first telecommunication terminal (TG1) instructs a time measuring entity (ZME), which is assigned to said first telecommunication terminal, to measure the time until the time-point which is specified in the time information or until the time-point which is predefined in the telecommunication device.

8. Method according to one of the claims 1 to 7, according to which the first telecommunication terminal (TG1) has a communication entity (MUA) for carrying out the communication with the switching component (VK) and a management entity (DA), which is connected to the communication entity, for managing the encrypted useful data objects (NDO).

9. Method according to claim 7 and 8, according to which following receipt of the at least one encrypted useful data object, the communication entity (MUA) asks the management entity (DA) whether a rights object (RO) is already present for the at least one encrypted useful data object (NSO) and, if not, instructs the time measuring entity to measure the time.

10. Method according to one of the claims 1 to 9, according to which the at least one encrypted useful data object (NDO) and the relevant assigned rights object (RO) are transferred to the first telecommunication terminal (TG1) via two different transport channels.

11. Method according to one of the preceding claims, according to which the messages and data are transferred between the switching component (VK) and the first telecommunication terminal (TG1) in the context of the Multimedia Messaging Service.

12. Method according to one of the claims 4 or 5 in conjunction with claim 11, according to which the delivery message is an MMS delivery message and/or the notification message is an MMS recipient notification, wherein the MMS delivery message and/or MMS recipient notification have a separate header field (X-Mms-DRM-Separate-Delivery) to which the time information is assigned as a field value.

13. Method according to one of the claims 1 to 12, according to which data to and from the first (TG1) and/or second telecommunication terminal is sent via an air interface.

14. Method according to claim 13, according to which the first and/or second telecommunication terminal (TG1) includes a radio module and is designed in particular as a mobile telephone, a cordless telephone, or a portable computer.

15. Method according to claim 13 or 14, according to which the transfer of messages to and from the first and/or second telecommunication terminal (TG1) takes place by means of WAP protocols or the Hypertext Transfer Protocol (http).

16. Method according to one of the claims 1 to 15, according to which the first telecommunication terminal (TG1) is part of a first telecommunication network.

17. Method according to claim 16, according to which the first telecommunication network is implemented as a mobile radio network which works in particular according to the GSM or UMTS standard.

18. Method according to one of the claims 16 or 17, according to which the switching component (VK) is designed as part of a second telecommunication network which is connected to the first telecommunication network, said second telecommunication network being implemented in particular as a telecommunication network which is based on Internet protocols such as the Hypertext Transfer Protocol.

19. Method according to claim 18, according to which the first and the second telecommunication networks are connected together by means of a connection component which is implemented in particular as a WAP gateway.

20. Method according to one of the claims 1 to 19, according to which the data provision component (DBK) is designed as a server of a content provider.

21. Method according to one of the claims 1 to 19, according to which the useful data object (NDO) contains text information, audio information, video information, an executable program, a software module or a combination of these information elements.

22. Telecommunication arrangement comprising a switching component (VK) and at least one first telecommunication terminal (TG1), wherein the telecommunication arrangement is designed to carry out a method as claimed in one of the claims 1 to 19.

23. Telecommunication terminal (TG1) for processing encrypted useful data objects (NDO), having the following features:
a communication entity (MUA) for receiving at least one encrypted useful data object;
a management entity (DA) for receiving and managing rights objects which are assigned to encrypted useful data objects, said rights objects containing the key and the usage rights for an assigned useful data object;
a user interface (GUI) for outputting information to a user;
wherein the communication entity (MUA) is also configured to process a time information (s_{ABS}), which is received in the context of the receipt of the at least one encrypted useful data object and specifies the time-point by when a rights object (RO) which is assigned to the at least one encrypted useful data object (NDO) will arrive at the management entity (DA), and to output a signal via the user interface (GUI) concerning the receipt of a useable useful data object only if the management entity (DA) receives a rights object (RO) before the specified time-point.

## Revendications

1. Procédé pour transmettre des objets de données utiles cryptés (NDO) à un premier terminal de télécommunication (TG1), selon lequel :
- au moins un objet de données utiles crypté est transmis par une composante de commutation (VK) d'un réseau de télécommunications au premier terminal de télécommunication (TG1) ;
- une information temporelle (S_{ABS}) est transmise par la composante de commutation (VK) au premier terminal de télécommunication (TG1), laquelle information indique jusqu'à quel instant un objet de droits (RO) qui est associé à l'au moins un objet de données utiles crypté (NDO) et qui contient la clé ainsi que les droits d'utilisation pour l'objet de données utiles associé parvient également au premier terminal de télécommunication ;
- le premier terminal de télécommunication (TG1) reçoit un objet de droits (RO) associé à l'au moins un objet de données utiles (NDO) ;
- le premier terminal de télécommunication (TG1) n'émet, via une interface utilisateur (GUI) qui lui est associée, un signal concernant la réception d'un objet de données utiles que lorsque l'instant indiqué dans l'information temporelle ou un instant prédéterminé dans le premier terminal de télécommunication s'est écoulé après la réception de l'objet de données utiles ou que l'au moins un objet de droits reçu pour rendre utilisable l'objet de données utiles a été reçu.

2. Procédé selon la revendication 1, selon lequel l'interface utilisateur, à la réception d'un objet de droits (RO) avant l'instant indiqué dans l'information temporelle ou un instant prédéterminé dans le terminal de télécommunication, émet un signal concernant la réception d'un objet de données utiles utilisable.

3. Procédé selon la revendication 1 ou 2, selon lequel, après que l'instant indiqué dans l'information temporelle ou l'instant prédéterminé dans le terminal de télécommunication s'est écoulé sans réception préalable d'un objet de droits, seul est émis, via l'interface utilisateur (GUI), un signal concernant la réception d'un objet de données utiles crypté.

4. Procédé selon l'une quelconque des revendications 1 à 3, selon lequel l'au moins un objet de données utiles crypté (NDO) est transmis avec l'information temporelle au premier terminal de télécommunication (TG1) au moyen d'un message de livraison (M-Rconf).

5. Procédé selon l'une des revendications 1 à 3, selon lequel l'information temporelle est transmise au premier terminal de télécommunication au moyen d'un message d'information (M-Nind) qui indique qu'un objet de données utiles (NDO) est disponible au niveau de la composante de commutation (VK) pour être délivré au premier terminal de télécommunication (TG1).

6. Procédé selon l'une des revendications 1 à 5, selon lequel l'au moins un objet de données utiles crypté (NDO) est envoyé par une composante de mise à disposition de données (DBK) du réseau de télécommunications ou par un deuxième terminal de télécommunication à la composante de commutation (VK) pour retransmission au premier terminal de télécommunication (TG1).

7. Procédé selon l'une des revendications 1 à 6, selon lequel le premier terminal de télécommunication (TG1), après la réception de l'information temporelle (S_{ABS}), ordonne à un dispositif de mesure du temps (ZME) qui lui est associé de mesurer le temps jusqu'à l'instant indiqué dans l'information temporelle ou l'instant prédéterminé dans le terminal de télécommunication.

8. Procédé selon l'une des revendications 1 à 7, selon lequel le premier terminal de télécommunication (TG1) comporte un dispositif de communication (MUA) pour effectuer la communication avec la composante de commutation (VK) et un dispositif de gestion (DA) pour gérer les objets de données utiles cryptés (NDO), lequel est relié au dispositif de communication.

9. Procédé selon la revendication 7 et 8, selon lequel le dispositif de communication (MUA), après la réception de l'au moins un objet de données utiles crypté, demande au dispositif de gestion (DA) s'il y a déjà un objet de droits (RO) pour l'au moins un objet de données utiles crypté (NDO) et, en l'absence d'un tel objet, ordonne au dispositif de mesure de temps de mesurer le temps.

10. Procédé selon l'une des revendications 1 à 9, selon lequel l'au moins un objet de données utiles crypté (NDO) et l'objet de droits respectivement associé (RO) sont transmis au premier terminal de télécommunication (TG1) sur deux canaux de transport différents.

11. Procédé selon l'une des revendications précédentes, selon lequel les messages et les données sont transmis entre la composante de commutation (VK) et le premier terminal de télécommunication (TG1) dans le cadre du Multimedia Messaging Service.

12. Procédé selon l'une des revendications 4 ou 5 en combinaison avec la revendication 11, selon lequel le message de livraison est un message de livraison MMS et/ou le message d'information est une information MMS au destinataire, le message de livraison MMS et/ou l'information MMS au destinataire comportant un champ d'en-tête distinct (x-Mms-DRM-Separate-Delivery) auquel l'information temporelle est associée en tant que valeur de champ.

13. Procédé selon l'une des revendications 1 à 12, selon lequel des données sont envoyées vers et émises par le premier (TG1) et/ou le deuxième terminal de télécommunication via une interface aérienne.

14. Procédé selon la revendication 13, selon lequel le premier et/ou le deuxième terminal de télécommunication (TG1) comprennent un module radio, qui se présente plus particulièrement sous la forme d'un téléphone mobile, d'un téléphone sans fil ou d'un ordinateur portable.

15. Procédé selon la revendication 13 ou 14, selon lequel la transmission de messages vers et à partir du premier et/ou du deuxième terminal de télécommunication (TG1) s'effectue au moyen de protocoles WAP ou du protocole de transfert hypertexte (http).

16. Procédé selon l'une des revendications 1 à 15, selon lequel le premier terminal de télécommunication (TG1) fait partie d'un premier réseau de télécommunications.

17. Procédé selon la revendication 16, selon lequel le premier réseau de télécommunications est réalisé en tant que réseau de téléphonie mobile qui fonctionne plus particulièrement selon la norme GSM ou UMTS.

18. Procédé selon l'une des revendications 16 ou 17, selon lequel la composante de commutation (VK) est réalisée en tant que partie d'un deuxième réseau de télécommunications qui est relié au premier réseau de télécommunications et qui est réalisé plus particulièrement en tant que réseau de télécommunications basé sur des protocoles internet, tels que le protocole de transfert hypertexte.

19. Procédé selon la revendication 18, selon lequel le premier et le deuxième réseau de télécommunications sont reliés entre eux par une composante de liaison qui est réalisée en particulier en tant que passerelle WAP.

20. Procédé selon l'une des revendications 1 à 19, selon lequel la composante de mise à disposition de données (DBK) est réalisée en tant que serveur d'un fournisseur de contenus.

21. Procédé selon l'une des revendications 1 à 19, selon lequel l'objet de données utiles (NDO) contient une information de type texte, une information audio, une information vidéo, un programme exécutable, un module logiciel ou une combinaison de ces informations.

22. Dispositif de télécommunication, comprenant une composante de commutation (VK) ainsi qu'au moins un premier terminal de télécommunication (TG1), le dispositif de télécommunication étant conçu pour exécuter un procédé selon l'une des revendications 1 à 19.

23. Terminal de télécommunication (TG1) pour traiter des objets de données utiles cryptés (NDO), présentant les caractéristiques suivantes :
- un dispositif de communication (MUA) pour recevoir au moins un objet de données utiles crypté ;
- un dispositif de gestion (DA) pour recevoir et gérer des objets de droits qui sont associés à des objets de données utiles cryptés et qui contiennent la clé ainsi que les droits d'utilisation pour un objet de données utiles associé ;
- une interface utilisateur (GUI) pour envoyer des informations à un utilisateur ;
- le dispositif de communication (MUA) étant en outre conçu pour traiter une information temporelle (S_{ABS}) reçue en rapport avec la réception de l'au moins un objet de données utiles crypté, laquelle indique jusqu'à quel instant un objet de droits (RO) associé à l'au moins un objet de données utiles crypté (NDO) arrive au dispositif de gestion (DA), et pour n'émettre via l'interface utilisateur (GUI) un signal concernant la réception d'un objet de données utiles utilisable que lorsque le dispositif de gestion (DA) reçoit encore un objet de droits (RO) avant l'instant indiqué.
